# EUROPÄISCHE PATENTSCHRIFT

(11) **EP 1 558 402 B1**
(45) Veröffentlichungstag und Bekanntmachung des Hinweises auf die Patenterteilung: **18.04.2007**
(21) Anmeldenummer: 03775175.7
(22) Anmeldetag: 08.10.2003
(51) Int. Cl.: B05D 3/06, B05D 3/14, C08J 7/18

(54) **VERFAHREN ZUR AUSBILDUNG VON UV-ABSORBERSCHICHTEN AUF SUBSTRATEN**
METHOD FOR PRODUCING UV ABSORPTION LAYERS ON SUBSTRATES
PROCEDE POUR CREER DES COUCHES D'ABSORPTION D'UV SUR DES SUBSTRATS

(30) Priorität: 09.10.2002 DE 10247125
(43) Veröffentlichungstag der Anmeldung: 03.08.2005
(73) Patentinhaber: Ciba Specialty Chemicals Holding Inc., 4057 Basel (CH)
(72) Erfinder: BAUER, Michael, 91301 Forchheim (DE); BARANYAI, Andreas, 79423 Heitersheim (DE); KUNZ, Martin, 79588 Efringen-Kirchen (DE)
(86) Internationale Anmeldenummer: PCT/EP2003/011133
(87) Internationale Veröffentlichungsnummer: WO 2004/035667

(56) Entgegenhaltungen:
- WO-A-00/24527
- WO-A-01/58971
- US-A- 6 099 122

## Beschreibung

Gegenstand der Erfindung ist ein Verfahren zur Ausbildung einer zusammenhängenden UV-absorbierenden Schicht auf organischen oder anorganischen Substraten.

In der US-A-5 156 882 wird die Herstellung UV-absorbierender Schichten aus TiO₂ oder anderen Übergangsmetalloxiden beschrieben, die durch plasmaunterstützte Abscheidung erhalten werden. Ein Problem bei der Abscheidung anorganischer Oxide ist, dass meist nur eine ungenügende Haftung auf den Substraten erreicht wird und daher zusätzlich Zwischenschichten, beispielsweise aus SiO₂, aufgebaut werden müssen. Diese UV-absorbierenden anorganischen Schichten sind in der Regel im sichtbaren Bereich nicht vollständig transparent, was für viele Anwendungen nachteilig ist.

Um diesen Nachteil zu beseitigen sind Versuche unternommen worden, zu UV-absorbierenden Beschichtungen zu gelangen, indem rein organische Schichten mittels Plasmaverfahren abgeschieden werden. So wird beispielsweise in DE-A-195 22 865 ein PECVD Verfahren ("plasma enhanced chemical vapor deposition") zur Herstellung UV-absorbierender Schichten mit Verbindungen beschrieben, welche ein Strukturelement der Formel (A) enthalten.

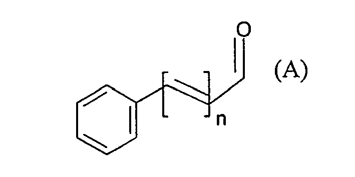

JP 6-25448, vom 1. Februar 1994, beschreibt ein Verfahren zur Plasmapolymerisation von bekannten UV-absorbern, wie Phenylsalicylaten, 2-Hydroxybenzophenonen, Hydroxyphenylbenzotriazolen und Cyanoacrylaten auf Polymermaterialien.

WO99/55471 beschreibt die plasmaunterstützte Vakuumabscheidung von Triazin UV-Absorbem, wobei die UV-Absorber verdampft und bei der Abscheidung auf dem Substrat gleichzeitig einem Plasma ausgesetzt werden. Der Prozess muss jedoch unter Vakuum ausgeführt werden und die Substanzen werden hohen Temperaturen (zum Verdampfen) und Energien (UV-Licht und energiereiche Spezies aus dem Plasma) ausgesetzt.

Die plasmaunterstützte Abscheidung von organischen Verbindungen führt häufig zu unvorhersehbaren Änderungen der Strukturen auf molekularer Ebene. Insbesondere wenn funktionelle Gruppen im Molekül vorhanden sind, kommt es zu Abbaureaktionen und anderen Veränderungen. Im Plasma können funktionelle Gruppen leicht oxidiert oder abgespalten werden. Zudem können die eingesetzten Moleküle durch die im Plasma vorhandene kurzwellige Strahlung und energiereiche Spezies, wie Ionen und Radikale, völlig zerstört werden. Der abgeschiedene Film kann daher viel geringere oder vollständig andere Absorptionseigenschaften und damit auch andere Schutzeigenschaften aufweisen, als die ursprünglich eingesetzte Verbindung. Neben der Absorption kann sich auch die photochemische Beständigkeit der abgeschiedenen Verbindung im Film von derjenigen der ursprünglichen Verbindung unterscheiden, so dass die Langzeitschutzwirkung des abgeschiedenen Films erheblich von derjenigen abweichen kann, die man mit der ursprünglichen Verbindung in einer konventionellen Beschichtung erwarten würde.
Darüber hinaus erfordern die genannten Plasmatechniken eine Durchführung im Vakuum und damit aufwendige Apparaturen und Zeitraubende Prozeduren. Weiterhin müssen die aufzutragenden oder zu polymerisierenden Verbindungen verdampft und auf dem Substrat wieder kondensiert werden, was zu hohen thermischen Belastungen und in vielen Fällen zu Zersetzung führen kann. Ausserdem sind die Verdampfungs- und Abscheideraten gering, so dass es schwierig und langwierig ist, Schichten mit einer ausreichenden Dicke und/oder einer entsprechend hohen Absorption zu erzeugen.

Es wurde nun überraschend ein Verfahren gefunden, das die Herstellung UV-absorbierender Schichten ohne die genannten Nachteile ermöglicht.

Gegenstand der Erfindung ist ein Verfahren zur Ausbildung von UV-Absorberschichten auf einem anorganischen oder organischen Substrat, dadurch gekennzeichnet, dass man
a) auf das anorganische oder organische Substrat ein Niedertemperatur-Plasma, eine Corona-Entladung oder energiereiche Strahlung einwirken läßt,
b) mindestens einen radikalbildenden Initiator und als UV-Absorber, enthaltend mindestens eine ethylenisch ungesättigte Gruppe, mindestens eine Verbindung ausgewählt aus der Gruppe bestehend aus 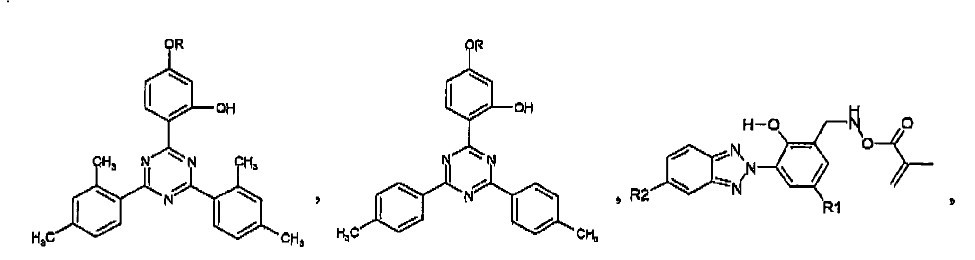 worin
   - R: -CH₂CH₂OCOCH=CH₂, -CH₂COOCH₂CH=CH-Phenyl, -CH₂CH(OH)CH₂OCOC(CH₃)=CH₂, -CH₂CH=CH₂, -CH₂COO(CH₂)₇CH=CHC₈H₁₇, -OCH=CH₂ oder -CH-OCH=CH₂ darstellt;
   - R1: H, C₁-C₁₂-Alkyl, C₆-C₁₀-Aryl bedeutet; und
   - R2: H, Halogen, C₁-C₁₂-Alkyl, C₆-C₁₀-Aryl ist; 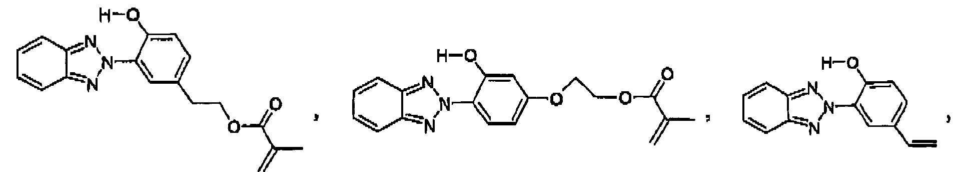 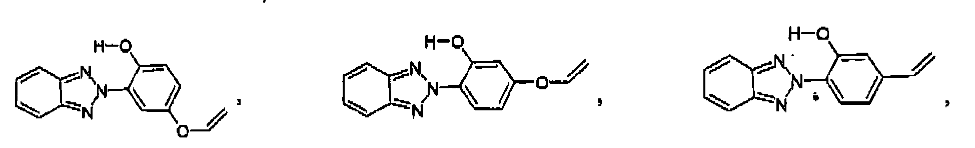 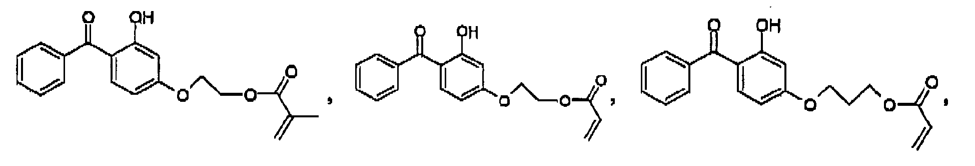 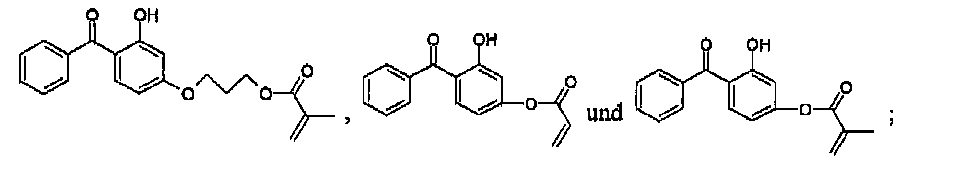
   und gegebenenfalls in Form von Schmelzen, Lösungen, Suspensionen oder Emulsionen als Synergist mindestens ein sterisch gehindertes Amin, einen Aminoether (>NOR-Verbindung), ein Benzoxazin und/oder einen Thioether und/oder mindestens eine ethylenisch ungesättigte Verbindung auf das behandelte anorganische oder organische Substrat aufbringt,
c) das beschichtete Substrat erwärmt und/oder mit elektromagnetischen Wellen bestrahlt.

Die Vorteile dieses Verfahrens liegen einerseits darin, dass sich durch diese Vorgehensweise Vakuumbedingungen umgehen lassen. Ferner wird eine übermäßige thermische oder energetische Belastung oder Zerstörung der UV-Absorber gänzlich vermieden. Gegenüber Spektren der UV-Absorber in Lösung zeigen die Absorptionsspektren der erzeugten Schichten keine Veränderung, was auf eine vollständige Erhaltung der Molekularstruktur hindeutet. Mit dem beschriebenen Verfahren bilden sich klare transparente Schichten auf den Substraten, die auch gut haften. In Kombination mit einfach oder mehrfach ethylenisch ungesättigten Verbindungen (Monomeren oder Oligomeren) lassen sich die mechanischen Eigenschaften der erzeugten Schichten in weiten Bereichen variieren. Dicke UV-Absorberschichten sind schnell und einfach zu erhalten und die Steuerung der optischen Dichte ist ebenfalls vereinfacht. Durch Kombination mit Lichtschutzmitteln lässt sich die Schutzwirkung noch steigern.

Bei organischen Substraten, insbesondere bei Polymeren, wird bisher ein Schutz und eine Stabilisierung gegen die Schädigung durch UV-Strahlen dadurch erreicht, dass man UV-Absorbern in die Masse der Materialien einarbeitet, In oberflächennahen Bereichen hingegen ist eine hohe Konzentration der UV-Absorber wünschenswert, da dort die höchste Lichtintensität herrscht und folglich auch die Schädigung am größten ist. Um einen ausreichen Schutz in oberflächennahen Bereichen zu erzielen muss eine relativ hohe Konzentration, bis zu 5 Gewichtsprozent, von UV-Absorber eingesetzt werden. Dabei wird der UV-Absorber gleichmäßig im Material verteilt und ist auch dort vorhanden, wo kein oder nur noch wenig UV-Licht hin gelangen kann. Da das Licht nur eine begrenzte Eindringtiefe besitzt, kann es in tiefer gelegene Schichten nicht vordringen und dort wäre eine geringere Konzentration oder kein UV-Absorber nötig. Dies bedeutet, dass mit dem herkömmlichen Vorgehen zuviel Absorber eingesetzt werden muss. Mit dem hier beschriebenen Verfahren kann die Menge an einzusetzendem UV-Absorber deutlich reduziert werden, weil er sich dort befindet, wo er gebraucht wird, nämlich an der Materialoberfläche.

Die Vorteile dieses Verfahrens liegen einerseits darin, dass sich durch diese Vorgehensweise Vakuumbedingungen umgehen lassen, Ferner wird eine übermäßige thermische oder energetische Belastung oder Zerstörung der UV-Absorber gänzlich vermieden. Gegenüber Spektren der UV-Absorber in Lösung zeigen die Absorptionsspektren der erzeugten Schichten keine Veränderung, was auf eine vollständige Erhaltung der Molekularstruktur hindeutet. Mit dem beschriebenen Verfahren bilden sich klare transparente Schichten auf den Substraten, die auch gut haften. In Kombination mit einfach oder mehrfach ethylenisch ungesättigten Verbindungen (Monomeren oder Oligomeren) lassen sich die mechanischen Eigenschaften der erzeugten Schichten in weiten Bereichen variieren. Dicke UV-Absorberschichten sind schnell und einfach zu erhalten und die Steuerung der optischen Dichte ist ebenfalls vereinfacht. Durch Kombination mit Lichtschutzmitteln lässt sich die Schutzwirkung noch steigern.

Bei organischen Substraten, insbesondere bei Polymeren, wird bisher ein Schutz und eine Stabilisierung gegen die Schädigung durch UV-Strahlen dadurch erreicht, dass man UV-Absorbern in die Masse der Materialien einarbeitet. In oberflächennahen Bereichen hingegen ist eine hohe Konzentration der UV-Absorber wünschenswert, da dort die höchste Lichtintensität herrscht und folglich auch die Schädigung am größten ist. Um einen ausreichen Schutz in oberflächennahen Bereichen zu erzielen muss eine relativ hohe Konzentration, bis zu 5 Gewichtsprozent, von UV-Absorber eingesetzt werden. Dabei wird der UV-Absorber gleichmäßig im Material verteilt und ist auch dort vorhanden, wo kein oder nur noch wenig UV-Licht hin gelangen kann. Da das Licht nur eine begrenzte Eindringtiefe besitzt, kann es in tiefer gelegene Schichten nicht vordringen und dort wäre eine geringere Konzentration oder kein UV-Absorber nötig. Dies bedeutet, dass mit dem herkömmlichen Vorgehen zuviel Absorber eingesetzt werden muss. Mit dem hier beschriebenen Verfahren kann die Menge an einzusetzendem UV-Absorber deutlich reduziert werden, weil er sich dort befindet, wo er gebraucht wird, nämlich an der Materialoberfläche,

Die Substrate können in Form eines Pulvers, einer Faser, eines Files, eines Gewebes, einer Folie oder als Formkörper bzw. dreidimensionales Werkstück vorliegen. Bevorzugte Substrate sind synthetische oder natürliche Polymere, Metalloxide, Gläser, Halbleiter, Quarz oder Metalle oder Materialien, die diese enthalten. Besonders bevorzugte Substrate sind solche, die Homo-, Block-, Graft- und/oder Copolymere enthalten. Als Halbleitersubstrat ist insbesondere Silizium zu nennen, welches zum Beispiel in Form von "Wavern" vorliegen kann. Als Metalle sind insbesondere Aluminium, Chrom, Stahl, Vanadium, die für die Herstellung hochwertiger Spiegel wie beispielsweise Teleskopspiegel oder Autoscheinwerferspiegel verwendet werden, zu nennen. Besonders bevorzugt ist Aluminium.

Beispiele für natürliche und synthetische Polymere oder Kunststoffe sind nachstehend aufgeführt:
i) Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbomen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE);
ii) Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE);
iii) Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden;
iv) Kohlenwasserstoffharze (z.B. C₅-C₉) inklusive hydrierte Modifikationen davon (z.B. Klebrigmacherharze) und Mischungen von Polyalkylenen und Stärke;
v) Polystyrol, Poly-(p-methylstyrol), Poly-(α-methylstyrol);
vi) Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol;
vii) Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Ma leinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind;
viii) Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinyliden- chlorid-Vinylacetat;
ix) Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile;
x) Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acryl- nitril-Alkylmethacrylat-Butadien-Terpolymere;
xi) Polymere, die sich von ungesättigten Alkoholen und Aminen bzw. deren Acylderivaten oder Acetalen ableiten, wie Polyvinylalkohol, Polyvinylacetat, -stearat, -benzoat, - maleat, Polyvinylbutyral, Polyallylphthalat, Polyallylmelamin; sowie deren Copolymere mit in Punkt 1 genannten Olefinen;
xii) Homo- und Copolymere von cyclischen Ethern, wie Polyalkylenglykole, Polyethylenoxyd, Polypropylenoxyd oder deren Copolymere mit Bisglycidylethern;
xiii) Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind;
xiv) Polyphenylenoxide und -sulfide und deren Mischungen mit Styrolpolymeren oder Polyamiden;
xv) Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte;
xvi) Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme");
xvii) Polyharnstoffe, Polyimide, Polyamid-imide, Polyetherimide, Polyesterimide, Polyhydantoine und Polybenzimidazole;
xviii) Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester;
xix) Polycarbonate und Polyestercarbonate;
xx) Polysulfone, Polyethersulfone und Polyetherketone;
xxi) Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze;
xxii) Trocknende und nicht-trocknende Alkydharze.
xxiii) Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen;
xxiv) Vernetzbare Acrylharze, die sich von substituierten Acrylsäureestern ableiten, wie z.B. von Epoxyacrylaten, Urethan-acrylaten oder Polyester-acrylaten;
xxv) Alkydharze, Polyesterharze und Acrylatharze, die mit Melaminharzen, Harnstoff harzen, Isocyanaten, Isocyanuraten, Polyisocyanaten oder Epoxidharzen vernetzt sind;
xxvi) Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden;
xxvii) Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate;
xxviii) Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/ PP, PA/PPO, PBT/PC/ABS oder PBT/PET/PC.

Bei natürlichen Polymeren sind Kohlefasern, Cellulose, Stärke, Baumwolle, Kautschuk, Kollophonium, Holz, Flachs, Sisal, Polypeptide, Polyaminosäuren und ihre Derivate als besonders bevorzugt zu nennen.

Bevorzugt handelt es sich bei dem synthetischen Polymer um ein Polycarbonat, Polyester, halogenhaltiges Polymer, Polyacrylat, Polyolefin, Polyamid, Polyurethan, Polystyrol und/oder Polyether.

Die Kunststoffe können in Form von Folien, Spritzgussteilen, Extrusionswerkstücken, Fasern, Filzen oder Geweben vorliegen. Neben Bauteilen für die Automobilindustrie können auch Gegenstände wie Brillen oder Kontaktlinsen mit einer UV-absorbierenden dünnen Schicht ausgestattet werden.

Möglichkeiten, Plasmen unter Vakuumbedingungen zu erhalten, sind vielfach in der Literatur beschrieben worden. Die elektrische Energie kann dabei auf induktivem oder kapazitivem Wege eingekoppelt werden. Es kann sich um Gleichstrom oder Wechselstrom handeln, wobei die Frequenz des Wechselstroms von wenigen kHz bis in den MHz- Bereich variieren kann. Eine Einspeisung im Mikrowellenbereich (GHz) ist ebenfalls möglich. Die Prinzipien der Plasmaerzeugung und Aufrechterhaltung werden zum Beispiel von A. T. Bell, "Fundamentals of Plasma Chemistry" in "Technology and Application of Plasma Chemistry", herausgegeben von J. R. Holahan und A. T. Bell, Wiley, New York (1974) oder von H. Suhr, Plasma Chem. Plasma Process 3(1),1, (1983) beschrieben.

Als Plasmagas kann sowohl ein Inertgas, als auch ein Gemisch aus Inertgas und Reaktivgas verwendet werden. Als primäre Plasmagase können beispielsweise He, Ar, Kr, Xe, N₂, O₂, H₂, Wasserdampf oder Luft verwendet werden. Das erfindungsgemäße Verfahren ist an und für sich nicht empfindlich gegenüber der Einkopplung der elektrischen Energie. Das Verfahren kann im Batch-Betrieb, beispielsweise in einer rotierenden Trommel oder bei Folien, Fasern oder Geweben im kontinuierlichen Betrieb durchgeführt werden. Diese Verfahren sind bekannt und im Stand der Technik beschrieben.

Das Verfahren ist auch unter Corona-Entladungsbedingungen durchführbar. Corona Entladungen werden unter Normaldruckbedingungen erzeugt, wobei als ionisiertes Gas am häufigsten Luft verwendet wird. Prinzipiell sind jedoch auch andere Gase und Mischungen möglich wie z.B. in COATING Vol. 2001, No. 12, 426, (2001) beschrieben. Der Vorteil von Luft als Ionisierungsgas bei Corona Entladungen liegt darin, dass in einer nach außen offenen Apparatur gearbeitet und zum Beispiel eine Folie zwischen den Entladungs-Elektroden kontinuierlich durchgezogen werden kann. Solche Prozessanordnungen sind bekannt und z. B. in J. Adhesion Sci. Technol. Vol 7, No. 10, 1105, (1993) beschrieben. Dreidimensionale Werkstücke können mit einem Plasmafreistrahl behandelt werden, indem die Konturen unter Zuhilfenahme von Robotern abgefahren werden.

Das Verfahren kann in einem weiten Druckbereich ausgeführt werden, wobei sich die Entladungscharakteristik mit zunehmendem Druck vom reinen Niedertemperatur-Plasma in Richtung Corona Entladung verschiebt und schließlich bei atmosphärischem Druck von ca. 1000-1100 mbar in eine Corona Entladung übergeht.

Bevorzugt wird das Verfahren bei einem Prozessdruck von 10⁻⁶ mbar bis zu atmosphärischem Druck durchgeführt (1013 mbar), insbesondere bei atmosphärischem Druck als Corona-Verfahren. Vorzugsweise wird das Verfahren so durchgeführt, dass als Plasmagas ein Inertgas oder ein Gemisch eines Inertgases mit einem Reaktivgas verwendet wird. Wird eine Corona-Entladung eingesetzt, so wird als Gas bevorzugt Luft, CO₂ und/oder Stickstoff verwendet. Besonders bevorzugt werden H₂, CO₂, He, Ar, Kr, Xe, N₂, O₂ oder H₂O einzeln oder als Gemisch als Plasmagase verwendet. Besonders vorteilhafte Ergebnisse werden erzielt, wenn die Behandlung des anorganischen oder organischen Substrats a) für eine Zeitdauer von 1 ms bis 300 s, besonders bevorzugt 10 ms bis 200 s, erfolgt.

Als radikalbildende Initiatoren kommen alle Verbindungen oder Mischungen von Verbindungen in Frage, die bei Erwärmung und/oder Bestrahlung mit elektromagnetischen Wellen ein oder mehrere Radikale erzeugen. Dazu gehören neben den meist thermisch aktivierten Verbindungen oder Kombinationen wie beispielsweise Peroxide und Hydroperoxide (auch in Kombination mit Beschleunigern wie z.B. Aminen und/oder Cobaltsalzen), Aminoether (NOR-Verbindungen) auch photochemisch aktivierbare Verbindungen (z.B. Benzoine) oder Kombinationen von Chromphoren mit Co-Initiatoren (z.B. Benzophenon und tert. Amine) oder Mischungen davon. Ebenso sind Sensibilisatoren mit Co-Initiatoren (z.B. Thixanthone mit tert. Aminen) oder Chromophoren (z.B. Thioxanthone mit Aminoketonen) einsetzbar. Redoxsysteme wie beispielsweise die Kombination von H₂O₂ mit Eisen(II)salzen können ebenfalls verwendet werden. Ebenso können Elektronentransfer-Paare wie beispielsweise Farbstoffe und Borate und/oder Amine zum Einsatz kommen. Als Initiator kann eine Verbindung oder Kombination von Verbindungen aus den Klassen der Peroxide, Peroxodicarbonate, Persulfate, Benzpinakole, Dibenzyle, Disulfide, Azoverbindungen, Redoxsysteme, Benzoine, Benzilketale, Acetophenone, Hydroxyalkylphenone, Aminoalkylphenone, A-cylphosphin- oxide, Acylphosphinsulfide, Acyloxyiminoketone, eine Peroxyverbindung, halogenierte Acetophenone, Phenylglyoxalate, Benzophenone, Oxime und Oximester, Thioxanthone, Camphorquinone, Ferrocene, Titanocene, Sulfoniumsalze, Iodoniumsalze, Diazoniumsalze, Oniumsalze, Boralkyle, Borate, Bisimidazole, Polysilane und/oder Farbstoffe, sowie entsprechender Coinitiatoren und/oder Sensibilisatoren benutzt werden.

Bevorzugte Verbindungen sind: Dibenzoylperoxid, Benzoylperoxid, Dicumylperoxid, Cumylhydroperoxid, Diisopropylperoxidicarbonat, Methylethylketonperoxid, Bis(4-t-butylcyclohexyl)peroxidicarbonat, Ammoniumperoxomonosulfat, Ammoniumperoxodisulfat, Dikaliumpersulfat, Dinatriumpersulfat, N,N-Azobisisobutyronitril, 2,2'-azobis(2,4-dimethylpentannitril), 2,2'-azobis(2-methylpropannitril), 2,2'-azobis(2-methylbutannitril), 1,1'-azobis(cyanocyclohexan), tert-Amylperoxobenzoat, 2,2'-Bis(tert-butylperoxy)butan, 1,1' -Bis(tert-butylperoxy)cyclohexan, 2,5-Bis(tert-butylperoxy)-2,5-dimethylhexan, 2,5-Bis(tert-butylperoxy)-2,5-dimethyl-3-hexyn, 1,1-Bis(tert-butylperoxy)-3,3,5-trimethylcyclohexan, tert-Butylhydroperoxid, tert-Butylperacetat, tert-Butylperoxid, tert-Butylperoxybenzoat, tert-Butylperoxyisopropylcarbonat, Cyclohexanonperoxid, Lauroylperoxid, 2,4-Pentandionperoxid, 2,5-di- methyl-2,5-di(tert-butylperoxy)hexan, Di-(2-tert.-butyl-peroxyisopropyl)-benzol, Cobaltoctanoat, Dicyclopentadienylchrome, Peressigsäure, Benpinakol und Dibenzylderivate wie Dimethyl-2,3-Diphenylbutan, 3,4-Dimethyl-3,4-diphenylhexan, Poly-1,4-diisopropyl- benzol, N,N Dimethyl Cyclohexyl Ammonium Dibutyl Dithiocarbamat, N-tert-butyl-2-benzothioazolesufenamid, Benzothiazyldisulfid und Tetrabenzylthiuramdisulfid.

Typische Beispiele für photoaktivierbare Systeme, die sowohl einzeln als auch in Gemischen verwendet werden können, sind nachstehend erwähnt. Zum Beispiel Benzophenone, Benzophenonderivate, Acetophenon, Acetophenonderivate, wie beispielsweise α-Hydroxy- cycloalkylphenylketone oder 2-Hydroxy-2-methyl-1-phenyl-propanon, Dialkoxyaceto- phenone, α-Hydroxy- oder α-Aminoacetophenone, wie z.B. (4-Methylthiobenzoyl)-1-methyl-1-morpholino-ethan, (4-Morpholino-benzoyl)-1-benzyl-1-dimethyl- amino-propan, 4-Aroyl-1,3-Dioxolane, Benzoinalkylether und Benzilketale, wie z.B. Benzildimethylketal, Phenylglyoxalate und Derivate davon, dimere Phenylglyoxalate, Monoacylphosphinoxide, wie z.B. (2,4,6-Trimethylbenzoyl)-phenyl-phosphinoxid, Bisacylphosphinoxide, wie z.B. Bis(2,6-dimethoxybenzoyl)-(2,4,4-trimethyl-pent-1-yl)phosphinoxid, Bis(2,4,6-trimethyl- benzoyl)phenylphosphinoxid oder Bis(2,4,6-trimethylbenzoyl)-(2,4-dipentoxyphenyl)- phosphinoxid, Trisacylphosphinoxide, Ferroceniumverbindungen oder Titanocene, wie beispielsweise (η⁵-2,4-cyclopentadien-1-yl)[1,2,3,4,5,6-η)-(1-methylethyl)benzene]iron(+)-hexa- fluorophosphat(-1) oder Dicyclopentadienyl-bis(2,6-difluoro-3-pyrrolophenyl)-titan. Sulfonium-und Iodoniumsalze wie z.B. Bis[4-(diphenylsulphonio)-phenyl]sulfidbishexa- fluorophosphat, (4-isobutylphenyl)-p-tolyl-iodonium hexafluorophosphat.

Als Coinitiatoren kommen zum Beispiel Photosensibilisatoren in Frage, welche die spektrale Empfindlichkeit verschieben bzw. verbreitern und dadurch eine Beschleunigung der Photopolymerisation bewirken. Dies sind insbesondere aromatische Carbonylverbindungen wie z.B. Benzophenon-, Thioxanthon-, insbesondere auch Isopropylthioxanthon, Anthrachinon- und 3-Acylcumarinderivate, Coumarine, Terphenyle, Styrylketone, sowie 3-(Aroylmethylen)-thiazoline, Campherchinon, aber auch Eosin-, Rhodamin- und Erythrosin-Farbstoffe. Als Coinitiatoren sind auch tert. Amine, Thiole, Borate, Phenylglycine, Phosphine und andere Elektrondonatoren einsetzbar.

Weitere Beispiele für Photosensibilisatoren sind
i) Thioxanthone, wie
   Thioxanthon, 2-Isopropylthioxanthon, 2-Chlorothioxanthon, 2-Dodecylthioxanthon, 2,4-Diethylthioxanthon, 2,4-Dimethylthioxanthon, 1-Methoxycarbonylthioxanthon, 2-Ethoxycarbonylthioxanthon, 3-(2-Methoxyethoxycarbonyl)thioxanthon, 4-Butoxycarbonylthioxanthon, 3-Butoxycarbonyl-7-methylthioxanthon, 1-Cyano-3-chlorothioxanthon, 1 -Ethoxycarbonyl-3-chlorothioxanthon, 1-Ethoxycarbonyl-3-ethoxythioxanthon, 1 -Ethoxycarbonyl-3-aminothioxanthon, 1-Ethoxycarbonyl-3-phenylsulfurylthioxanthon, 3,4-Di-[2-(2-methoxyethoxy)ethoxycarbonyl]thioxanthon, 1-Ethoxycarbonyl-3-(1-methyl-1-morpholinoethyl)thioxanthon, 2-Methyl-6-dimethoxymethylthioxanthon, 2-Methyl-6-(1,1-dimethoxybenzyl)thioxanthon, 2-Morpholinomethylthioxanthon, 2-Methyl-6-morpholinomethylthioxanthon, N-Allylthioxanthone-3,4-dicarboximid, N-Octylthioxanthon-3,4-dicarboximid, N-(1,1,3,3-Tetramethylbutyl) thioxanthon-3,4-dicarboximid, 1-Phenoxythioxanthon, 6-Ethoxycarbonyl-2-methoxythioxanthon, 6-Ethoxycarbonyl-2-methylthioxanthon, Thioxanthon-2-polyethylenglycolester, 2-Hydroxy-3-(3,4-dimethyl-9-oxo-9H-thioxanthon-2-yloxy)-N,N,N-trimethyl-1-propanaminiumchlorid;
ii) Benzophenone, wie
   Benzophenon, 4-Phenylbenzophenon, 4-Methoxy benzophenon, 4,4'-Dimethoxybenzophenon, 4,4'-Dimethylbenzophenon, 4,4'-Dichlorobenzophenon, 4,4'-Dimethylaminobenzophenon, 4,4'-Diethylaminobenzophenon, 4-Methylbenzophenon, 2,4,6-Trimethylbenzophenon, 4-(4-Methylthiophenyl)-benzophenon, 3,3'-Dimethyl-4-methoxybenzophenon, Methyl-2-benzoylbenzoat, 4-(2-Hydroxyethylthio)-benzophenon, 4-(4-Tolylthio)benzophenon, 4-Benzoyl-N,N,N-trimethylbenzolmethanaminiumchlorid, 2-Hydroxy-3-(4-benzoylphenoxy)-N,N,N-trimethyl-1-propanaminiumchloridmonohydrat, 4-(13-Acryloyl-1,4,7,10,13-pentaoxatridecyl)- benzophenon, 4-Benzoyl-N,N-dimethyl-N-[2-(1-oxo-2-propenyl)oxy]ethylbenzolmethanaminiumchlorid;
iii) 3-Acylkumarine, wie
   3-Benzoylkumarin, 3-Benzoyl-7-methoxykumarin, 3-Benzoyl-5,7-di(propoxy)-kumarin, 3-Benzoyl-6,8-dichlorokumarin, 3-Benzoyl-6-chloro-kumarin, 3,3'-Carbonyl-bis[5,7-di-(propoxy)kumarin], 3,3'-Carbonyl-bis(7-methoxykumarin), 3,3'-Carbonyl-bis(7-diethylaminokumarin), 3-Isobutyroylkumarin, 3-Benzoyl-5,7-dimethoxy-kumarin, 3-Benzoyl-5,7-diethoxykumarin, 3-Benzoyl-5,7-dibutoxy-kumarin, 3-Benzoyl-5,7-di(methoxy- ethoxy)-kumarin, 3-Benzoyl-5,7,di(allyloxy)-kumarin, 3-Benzoyl-7-dimethylaminokumarin, 3-Benzoyl-7-diethylaminokumarin, 3-Isobutyroyl-7-dimethylaminokumarin, 5,7-Dimethoxy-3-(1-naphthoyl)-kumarin, 5,7-dimethoxy-3-(1-naphthoyl)-kumarin, 3-Benzoylbenzo[f]-kumarin, 7-Diethylamino-3-thienoylkumarin, 3-(4-Cyanobenzoyl)-5,7-dimethoxykumarin;
iv) 3-(Aroylmethylen)thiazoline, wie
   3-Methyl-2-benzoylmethylene-β-naphthothiazolin, 3-Methyl-2-benzoylmethylene-benzothiazolin, 3-Ethyl-2-propionylmethylen-β-naphthothiazolin;
v) Andere Carbonylverbindungen, wie
   Acetophenon, 3-Methoxyacetophenon, 4-Phenylacetophenon, Benzil, 2-Acetylnaphthalin, 2-Naphthaldehyd, 9,10-Anthrachinon, 9-Fluorenon, Dibenzosuberon, Xanthon, 2,5-Bis(4-diethylaminobenzyliden)cyclopentanon, α-(para-Dimethylaminobenzyliden)ketone, wie 2,(4-Dimethylamino-benzyliden)-indan-1-on oder 3-(4-Dimethylamino-phenyl)-1-indan-5-yl-propenon, 3-Phenylthiophthalimid, N-Methyl-3,5-di(ethylthio)-phthalimid, N-Methyl-3,5-di(ethylthio)-phthalimid.

Als UV-Absorber werden folgende Verbindungen eingesetzt 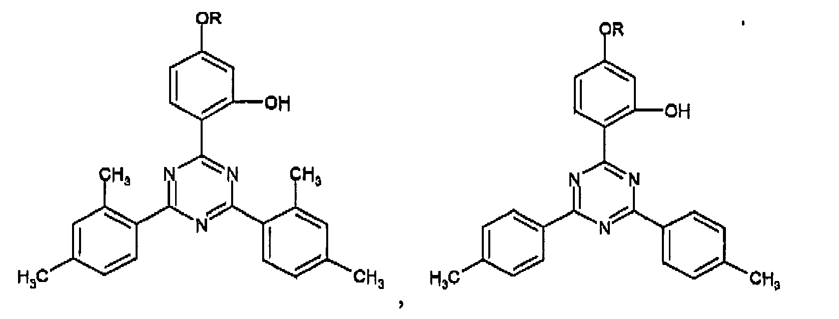 wobei
- R=: -CH₂CH₂OCOCH=CH₂ -CH₂COOCH₂CH=CH-Phenyl -CH₂CH(OH)CH₂OCOC(CH₃)-CH₂ -CH₂CH=CH₂ -CH₂COO(CH₂)₇CH=CHC₈H₁₇ -OCH=CH₂ -CH-OCH=CH₂ ist. 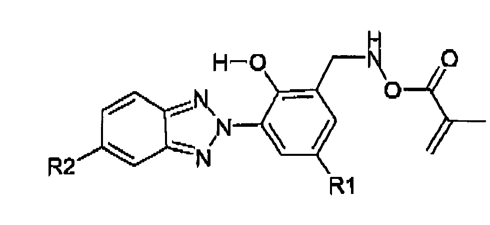 mit R1 = H, C₁-C₁₂-Alkyl, C₆-C₁₀-Aryl mit R2 = H, Halogen, C₁-C₁₂-Alkyl, C₆-C₁₀-Aryl 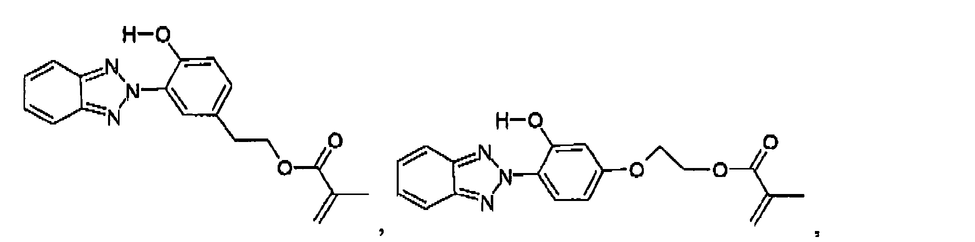 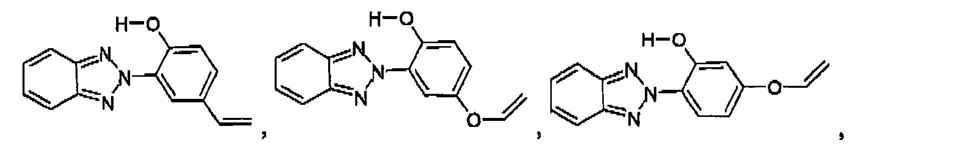 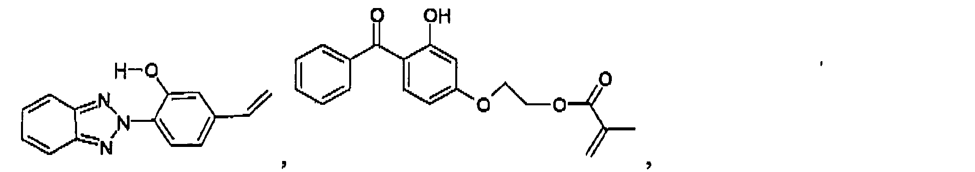 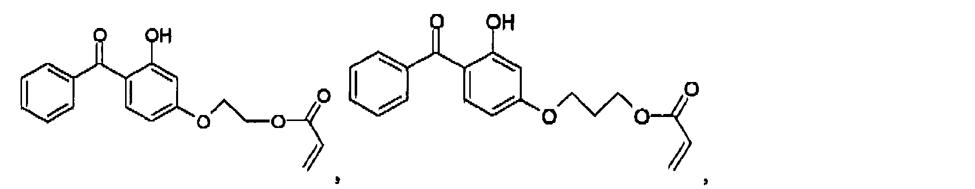 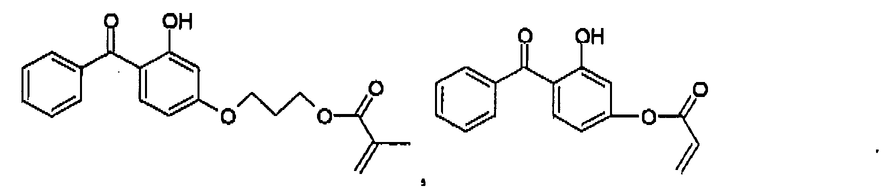 und

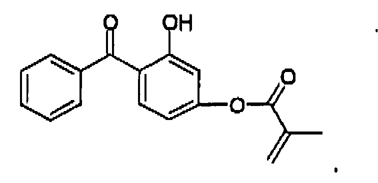

Die ethylenisch ungesättigten Verbindungen können eine oder mehrere olefinische Doppelbindungen enthalten. Sie können niedermolekular (monomer) oder höhermolekular (oligomer, polymer) sein. Beispiele für Monomere mit einer Doppelbindung sind Alkyl- oder Hydroxyalkyl-acrylate oder -methacrylate, wie z.B. Methyl-, Ethyl-, Butyl-, 2-Ethylhexyl- oder 2-Hydroxyethylacryl-at, Isobornylacrylat, Methyl- oder Ethylmethacrylat. Interessant sind auch Silicon-acrylate. Weitere Beispiele sind Acrylnitril, Acrylamid, Methacrylamid, N-substituierte (Meth)acrylamide, Vinylester wie Vinylacetat, Vinylether wie Isobutylvinylether, Styrol, Alkyl- und Halo-genstyrole, N-Vinylpyrrolidon, Vinylchlorid oder Vinylidenchlorid. Besonders bevorzugt handelt es sich bei den ethylenisch ungesättigten Monomeren, Oligomeren und/oder Polymeren um mono-, di-, tri-, tetra- oder multifunktionelle VinyIether, Acrylate und/oder Methacrylate.

Beispiele für Monomere mit Doppelbindungen sind Ethylenglykol-, Propylenglykol-, Neopentylglykol-, Hexamethylenglykol- oder Bisphenol-A-diacrylat, 4,4'-Bis(2-acryloyloxyethoxy)diphenylpropan-, Trimethylolpropantriacrylat, Pentaerythrittriacrylat oder -tetraacrylat, Vinylacrylat, Divinylbenzol, Divinylsuccinat, Diallylphthalat, Triallylphosphat, Triallylisocyanurat, Tris(hydroxyethy)isocyanurattriacrylat oder Tris-(2-acryloylethyl)isocyanurat.

Beispiele für höhermolekulare (oligomere) mehrfach ungesättigte Verbindungen sind acrylierte Epoxidharze, acrylierte oder Vinylether- oder Epoxy-Gruppen enthaltende Polyester, Polyurethane und Polyether. Weitere Beispiele für ungesättigte Oligomere sind ungesättigte Polyesterharze, die meist aus Maleinsäure, Phthalsäure und einem oder mehreren Diolen hergestellt werden und Molekulargewichte von etwa 500 bis 3000 besitzen. Daneben können auch Vinylether-Monomere und -Oligomere, sowie maleatterminierte Oligomere mit Polyester-, Polyurethan-, Polyether-, Polyvinylether- und Epoxidhauptketten eingesetzt werden. Insbesondere Kombinationen von Vinylethergruppen tragenden Oligomeren und Polymeren, wie sie in der WO 90/01512 beschrieben sind, sind gut geeignet. Aber auch Copolymere aus Vinylether und Maleinsäure funktionalisierten Monomeren kommen in Frage. Solche ungesättigten Oligomere kann man auch als Prepolymere bezeichnen.

Besonders geeignet sind z.B. Ester von ethylenisch ungesättigten Carbonsäuren und Polyolen oder Polyepoxiden, und Polymere mit ethylenisch ungesättigten Gruppen in der Kette oder in Seitengruppen, wie z. B. ungesättigte Polyester, Polyamide und Polyurethane und Copolymere hiervon, Alkydharze, Polybutadien und Butadien-Copolymere, Polyisopren und Isopren-Copolymere, Polymere und Copolymere mit (Meth)Acrylgruppen in Seitenketten, sowie Mischungen von einem oder mehreren solcher Polymerer.

Beispiele für ungesättigte Carbonsäuren sind Acrylsäure, Methacrylsäure, Crotonsäure, Itaconsäure, Zimtsäure, ungesättigte Fettsäuren wie Linolensäure oder Oelsäure. Bevorzugt sind Acryl- und Methacrylsäure.

Als Polyole sind aromatische und besonders aliphatische und cycloaliphatische Polyole geeignet. Beispiele für aromatische Polyole sind Hydrochinon, 4,4'-Dihydroxydiphenyl, 2,2-Di (4-hydroxyphenyl)-propan, sowie Novolake und Resole. Beispiele für Polyepoxide sind solche auf der Basis der genannten Polyole, besonders der aromatischen Polyole und Epichlorhydrin. Ferner sind auch Polymere und Copolymere, die Hydroxylgruppen in der Polymerkette oder in Seitengruppen enthalten, wie z.B. Polyvinylalkohol und Copolymere davon oder Polymethacrylsäurehydroxyalkylester oder Copolymere davon, als Polyole geeignet. Weitere geeignete Polyole sind Oligoester mit Hydroxylendgruppen.

Beispiele für aliphatische und cycloaliphatische Polyole sind Alkylendiole mit bevorzugt 2 bis 12 C-Atomen, wie Ethylenglykol, 1,2- oder 1,3-Propandiol, 1,2-, 1,3- oder 1,4-Butandiol, Pentandiol, Hexandiol,Octandiol, Dodecandiol, Diethylenglykol, Triethylenglykol, Polyethyl-englykole mit Molekulargewichten von bevorzugt 200 bis 1500, 1,3-Cyclopentandiol, 1,2-, 1,3- oder 1,4-Cyclohexandiol, 1,4-Dihydroxymethylcyclohexan, Glycerin, Tris-(β-hydroxyethyl)amin, Trimethylolethan, Trimethylolpropan, Pentaerythrit, Dipentaerythrit und Sorbit.

Die Polyole können teilweise oder vollständig mit einer oder verschiedenen ungesättigten Carbonsäuren verestert sein, wobei in Teilestern die freien Hydroxylgruppen modifiziert, z.B. verethert oder mit anderen Carbonsäuren verestert sein können.

### Beispiele für Ester sind:

Trimethylolpropantriacrylat, Trimethylolethantriacrylat, Trimethylolpropantrimethacrylat, Trimethylolethantrimethacrylat, Tetramethylenglykoldimethacrylat, Triethylenglykoldimeth-acrylat, Tetraethylenglykoldiacrylat, Pentaerythritdiacrylat, Pentaerythrittriacrylat, Pentaery-thrittetraacrylat, Dipentaerythritdiacrylat, Dipentaerythrittriacrylat, Dipentaerythrittetraacrylat, Dipentaerythritpentaacrylat, Dipentaerythrithexaacrylat, Tripentaerythritoctaacrylat, Pentaerythritdimethacrylat, Pentaerythrittrimethacrylat, Dipentaerythritdimethacrylat, Dipentaerythrittetramethacrylat, Tripentaerythritoctamethacrylat, Pentaerythritdiitaconat, Dipentaery-thrittrisitaconat, Dipentaerythritpentaitaconat, Dipentaerythrithexaitaconat, Ethylenglykoldi-acrylat, 1,3-Butandioldiacrylat, 1,3-Butandioldimethacrylat, 1,4-Butandioldiitaconat, Sorbit-triacrylat, Sorbittetraacrylat, Pentaerythrit-modifiziert-triacrylat, Sorbittetramethacrylat, Sor-bitpentaacrylat, Sorbithexaacrylat, Oligoesteracrylate und -methacrylate, Glycerindi- und -triacrylat, 1,4-Cyclohexandiacrylat, Bisacrylate und Bismethacrylate von Polyethylenglycol mit Molekulargewicht von 200 bis 1500, oder Gemische davon.

Als Komponente sind auch die Amide gleicher oder verschiedener ungesättigter Carbonsäuren von aromatischen, cycloaliphatischen und aliphatischen Polyaminen mit bevorzugt 2 bis 6, besonders 2 bis 4 Aminogruppen geeignet. Beispiele für solche Polyamine sind Ethylendiamin, 1,2- oder 1,3-Propylendiamin, 1,2-, 1,3- oder 1,4-Butylendiamin, 1,5-Pentylendiamin, 1,6-Hexylendiamin, Octylendiamin, Dodecylendiamin, 1,4-Diamino-cyclohexan, Isophorondiamin, Phenylendiamin, Bisphenylendiamin, Di-β-aminoethylether, Diethylentriamin, Triethylentetramin, Di(β-aminoethoxy)- oder Di(β-aminopropoxy)ethan. Weitere geeignete Polyamine sind Polymere und Copolymere mit gegebenenfalls zusätzlichen Aminogruppen in der Seitenkette und Oligoamide mit Aminoendgruppen. Beispiele für solche ungesättigten Amide sind: Methylen-bis-acrylamid, 1,6-Hexamethylen-bis-acrylamid, Diethylentriamin-tris-methacrylamid, Bis(methacrylamidopropoxy)ethan, β-Methacryl- amidoethylmethacrylat, N[(β-Hydroxyethoxy)ethyl]-acrylamid.

Geeignete ungesättigte Polyester und Polyamide leiten sich z.B. von Maleinsäure und Diolen oder Diaminen ab. Die Maleinsäure kann teilweise durch andere Dicarbonsäuren ersetzt sein. Sie können zusammen mit ethylenisch ungesättigten Comonomeren, z.B. Styrol, eingesetzt werden. Die Polyester und Polyamide können sich auch von Dicarbonsäuren und ethylenisch ungesättigten Diolen oder Diaminen ableiten, besonders von längerkettigen mit z.B. 6 bis 20 C-Atomen. Beispiele für Polyurethane sind solche, die aus gesättigten oder ungesättigten Diisocyanaten und ungesättigten bzw. gesättigten Diolen aufgebaut sind.

Polybutadien und Polyisopren und Copolymere davon sind bekannt. Geeignete Comonomere sind z.B. Olefine wie Ethylen, Propen, Buten, Hexen, (Meth)-Acrylate, Acrylnitril, Styrol oder Vinylchlorid. Polymere mit (Meth)-Acrylatgruppen in der Seitenkette sind ebenfalls bekannt. Es kann sich z.B. um Umsetzungsprodukte von Epoxidharzen auf Novolakbasis mit (Meth)-Acrylsäure handeln, um Homo- oder Copolymere des Vinylalkohols oder deren Hydroxyalkylderivaten, die mit (Meth)-Acrylsäure verestert sind, oder um Homo- und Copolymere von (Meth)-Acrylaten, die mit Hydroxyalkyl(meth)acrylaten verestert sind.

Besonders bevorzugt wird als einfach oder mehrfach ungesättigte olefinische Verbindung eine Vinylether-, Acrylat- oder Methacrylatverbindung verwendet. Ganz besonders bevorzugt sind mehrfach ungesättigte Acrylatverbindungen, wie sie vorstehend bereits aufgeführt wurden.

Aus vielen Veröffentlichungen ist bekannt, dass UV-Absorber in Kombination mit anderen Stoffen (Synergisten) einen besonders effektiven Schutz ermöglichen. Derartige Synergisten können im Rahmen der Erfindung ebenfalls verwendet werden. Synergisten sind beispielsweise Lichtschutzmittel, Radikalfänger, Peroxidzersetzer etc. Synergisten sind beispielsweise Verbindungen aus den Klassen der sterisch gehinderten Amine, Aminoether (>NOR-Verbindungen), Benzoxazine und/oder Thioether. Beispielhaft seinen einige Verbindungen genannt: Bis-(2,2,6,6-tetramethyl-piperidyl)sebacat, Bis-(2,2,6,6-tetramethyl-piperidyl)succinat, Bis-(1, 2,2,6,6-pentamethylpiperidyl)sebacat, n-Butyl-3,5-di-tert-butyl-4-hydroxybenzylmalonsäure-bis(1,2,2,6,6-pentamethylpiperidyl)ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2, 6,6-Tetramethyl-4-piperidyl)hexamethylendiamin und 4-tert-Octylamino-2,6-dichlor-1,3,5-s-triazin, Tris-(2,2,6,6-tetramethyl-4-piperidyl)nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6, 6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro-[4.5]decan-2,4-dion, Bis-(1-octyloxy-2,2,6,6-tetramethylpiperidyl)sebacat, Bis-(1-octyloxy-2,2,6,6-tetramethylpiperidyl)succinat, Kondensationsprodukt aus N,N'-Bis-(2,2,6,6-tetramethyl-4-piperidyl)hexamethylendiamin und 4-Morpholino-2,6-dichlor-1,3,5triazin, Kondensationsprodukt aus 2-Chlor-4,6-di-(4-n-butylamino-2,2, 6,6-tetramethylpiperidyl)-1,3,5-triazin und 1,2-Bis-(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)ethan, 8-Acetyl-3-dodecyl-7,7,9,9-tetramethyl-1,3,8-triazaspiro[4.5]-decan-2,4-dion, 3-Dodecyl-1-(2,2,6,6-tetramethyl-4-piperidyl)pyrrolidin-2,5-dion, 3-Dodecyl-1-(1,2,2,6,6-penta-methyl-4-piperidyl)-pyrrolidin-2,5-dion, 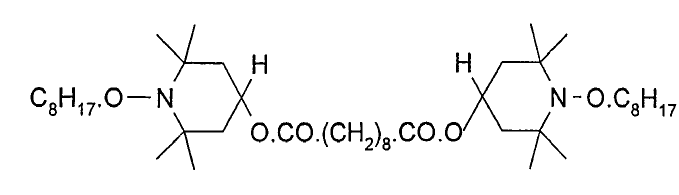 und Reaktionsprodukte von N,N'-Ethan-1,2-diylbis(1,3-propandiamin), Cyclohexan, peroxidiertem 4-butylamino-2,2,6,6-tetramethylpiperidin und 2,4,6-trichloro-1,3,5-triazin.

Grundsätzlich gilt, dass es vorteilhaft ist, die UV-Absorber enthaltenden Lösungen, Suspensionen oder Emulsionen so rasch wie möglich aufzubringen. Für viele Zwecke kann es aber auch akzeptabel sein, den Schritt b) mit einer zeitlichen Verzögerung durchzuführen. Bevorzugt jedoch wird der Verfahrensschritt b) unmittelbar oder innerhalb von 24 Stunden nach dem Verfahrensschritt a) durchgeführt wird.

Die Aufbringung der UV-Absorber enthaltenden Schmelzen, Lösungen, Suspensionen oder Emulsionen kann auf unterschiedliche Art und Weise erfolgen. Das Aufbringen kann durch Tauchen, Aufsprühen, Aufstreichen, Aufpinseln, Aufrakeln, Aufrollen, Aufwalzen, Aufdrucken, Aufschleudern und Aufgießen geschehen.

In den aufzutragenden Flüssigkeiten sind die Initiatoren vorzugsweise in Konzentrationen von 0,01 bis 20%, insbesondere von 0,1 bis 5%, und die UV-Absorber in Konzentrationen von 0,1 bis 99%, insbesondere von 0,1 bis 50%, enthalten. Die ethylenisch ungesättigten Verbindungen liegen vorzugsweise in diesen Flüssigkeiten in Konzentrationen von 0,1 bis 50%, vorzugsweise von 0,1 bis 30%, vor.

Bei Mischungen von UV-Absorbern untereinander, mit Lichtschutzmitteln und/oder ethylenisch ungesättigten Verbindungen sind alle möglichen Mischungsverhältnisse brauchbar. Je nach Art der späteren Verwendung werden diese Verhältnisse aufeinander abgestimmt, um die optischen, mechanischen und /oder anderen erforderlichen Eigenschaften zu optimieren.

Die den UV-Absorber enthaltenden Flüssigkeiten, können zusätzlich noch andere Stoffe wie z.B. Entschäumer, Emulgatoren, Tenside, Antifoulingmittel, Netzmittel und andere in der Lack- und Farbenindustrie gebräuchliche Zusatzstoffe enthalten.

Die Dicke der aufgetragenen Schicht im trockenen Zustand wird ebenfalls den Erfordernissen der späteren Verwendung angepasst und reicht von einer monomolekularen Schicht bis zu 2 mm, vorzugsweise von 1 bis 1000 µm.

Grundsätzlich ist es vorteilhaft, die UV-Absorber enthaltenden Lösungen, Suspensionen oder Emulsionen so rasch wie möglich zu erwärmen, zu trocknen oder zu bestrahlen, denn durch diesen Schritt wird die Schicht fixiert und stabilisiert. Für viele Zwecke kann es aber auch akzeptabel sein, den Schritt c) mit einer zeitlichen Verzögerung durchzuführen. Bevorzugt jedoch wird der Verfahrensschritt c) unmittelbar oder innerhalb von 24 Stunden nach dem Verfahrensschritt b) durchgeführt.

Zur Erwärmung/Trocknung von Beschichtungen sind vielfältige Möglichkeiten bekannt und sie können alle im beanspruchten Verfahren verwendet werden. So ist beispielsweise der Einsatz von warmen Gasen, IR-Strahlern, Öfen, beheizten Walzen und/oder mit Mikrowellen möglich. Die Temperaturen, die dazu verwendetet werden richten sich nach der Temperaturstabilität der eingesetzten Materialien und bewegen sich in der Regel zwischen 0 und 300°C, bevorzugt werden sie zwischen 0 und 200°C liegen. Gegebenenfalls wird ein Trocknungsschritt vorgeschaltet.

Beim Vorliegen von besonders temperaturempfindlichen Materialien kann eine Bestrahlung mit elektromagnetischen Wellen vorteilhaft sein. Dabei ist darauf zu achten, dass ein Initiator verwendet wird, der auch in solchen Wellenlängenbereichen absorbiert, in denen der UV-Absorber keine oder nur eine geringe Absorption aufweist. Gegebenenfalls wird ein Trocknungsschritt vorgeschaltet. Eine Bestrahlung der Beschichtung kann mit allen Quellen durchgeführt werden, die elektromagnetische Wellen mit Wellenlängen emittieren, welche von den verwendeten Photoinitiatoren absorbiert werden können. Dies sind in der Regel Quellen, die elektromagnetische Strahlung mit Wellenlängen im Bereich von 200 nm bis 20000 nm emittieren. Neben gebräuchlichen Strahlern und Lampen sind auch Laser und LEDs (Light Emitting Diode) einsetzbar. Die Belichtung kann flächig oder partiell erfolgen. Partielle Belichtung ist dann von Vorteil, wenn nur bestimmte Bereiche zur Haftung gebracht werden sollen. Die Bestrahlung kann auch mit Elektronenstrahlen durchgeführt werden. Die Bestrahlung kann flächig und/oder partiell, beispielsweise mittels Belichtung durch eine Maske oder mittels Laserstrahlen, erfolgen. Damit ist es möglich nur in bestimmten Bereichen eine Fixierung und Stabilisierung der Beschichtung zu erzielen. In unbelichteten Bereichen könnte die Schicht wieder abgewaschen und so eine Strukturierung erreicht werden.

Die Erwärmung/Trocknung und/oder Bestrahlung kann unter Luft oder unter Inertgas durchgeführt werden. Als Inertgas kommt Stickstoffgas in Frage, aber auch andere Inertgase wie CO₂ oder Argon, Helium etc. oder Mischungen davon können verwendet werden. Entsprechende Anlagen und Geräte sind dem Fachmann bekannt und im Handel erhältlich. Die Erwärmung/Trocknung kann jedoch auch ohne Inertgas, also in Luft, durchgeführt werden.

Weiterhin werden Substrate mit UV-Absorberschichten, sowie Beschichtungen, hergestellt nach einem der vorgehend beschriebenen Verfahren, beansprucht. Diese Beschichtungen sind dadurch gekennzeichnet, dass sie im Absorptionsmaximum des UV-Absorbers eine optische Dichte von 0,1 bis 6, vorzugsweise von 0,5 bis 4, besonders bevorzugt von 1 bis 3 aufweist. In diesen Beschichtungen macht der UV-Absorberanteil mindestens 10%, vorzugsweise mindestens 15%, besonders bevorzugt mindestens 20% aus.

Die mit UV-Absorber versehenen Substrate können vielseitig verwendet werden. Im Vordergrund stehen dabei sicherlich Anwendungen in welchen ein UV-Schutz erzielt werden soll. Der Schutz kann eine Oxidation, Verfärbung, Bleichung oder andere Schädigung vermindern oder verhindern. Das kann in Form von Folien erfolgen, die entweder permanent oder temporär auf ein weiteres Substrat aufgebracht werden oder es umhüllen. So sind sie als Schutz- und/oder Verpackungsmaterialien für Lebensmittel, Chemikalien, Pharmazeutika, Textilien, Tierfutter, Kosmetika, Gläser, Kunststoffprodukte, Lacke und Farben (flüssig oder bereits getrocknet/gehärtet), Druckplatten, Agrochemikalien, Düngemittel, tiermedizinische und tierhygienische Produkte einsetzbar. Weiterhin können solche Folien auch zum Schutz von bedruckten Materialien wie beispielsweise Papieren, Fotografien, Plakaten, Planen, Stickern, Aufklebern, Werbeflächen, Leuchtreklamen, Sportartikel, Bildschirmen, etc. eingesetzt werden, um in erster Linie die Farbqualität zu erhalten und die Lebensdauer zu verlängern. Auch in Form von Gewächshausfolien und anderen Sonnen- und UV-Schutzanwendungen (beispielsweise Wegwerffolien für Solarien) erfüllen die beschriebenen Folien ihre Schutzfwktion.

Die mit UV-Absorber versehenen Substrate können auch in Form von Behältern, z.B. Flaschen, Dosen, Eimern etc., eingesetzt werden und zum Schutz von Lebensmitteln, Chemikalien, Pharmazeutika, Textilien, Tierfutter, Kosmetika, Gläsern, Kunststoffprodukten, Lacken und Farben (flüssig oder bereits getrocknet/gehärtet), Agrochemikalien, Herbizide, Fungizide, Düngemitteln, tiermedizinischen und tierhygienischen Produkten dienen.

Verwendungsmöglichkeiten in Form dreidimensionaler Bauteile sind beispielsweise: Streuscheiben für Lampen und/oder Scheinwerfer, Kunststofffenster, Automobilteile, Sportgeräte, Behälter, etc.

Eine weitere Anwendung stellt die Verwendung der mit UV-Absorber versehenen Substrate als Filter dar. Über die Variation der Schichtdicke und/oder der optischen Dichte der UV-Absorberschicht auf organischen oder anorganischen Gläsern können definierte Transmissionswerte eingestellt werden. Filter dieser Art sind insbesondere in optischen Anwendungen einsetzbar, beispielsweise in der Fotografie, Mikroskopie, oder in Form von Linsen, Brillen, Kontaktlinsen, Lupen, Teleskopen, Bildschirmen, Ferngläsern und Spiegeln. Auch in Vergrößerungsgeräten, Kopierern, Projektoren, Lampen, Solarien, Beleuchtungs- und Belichtungsgeräten liegen Einsatzmöglichkeiten für solche Filter.

Ebenso werden Produkte, die mit einer Beschichtung nach einem der vorhergehenden Ansprüche versehen sind, beansprucht.

Die nachstehenden Beispiele erläutern die Erfindung.

### Beispiel 1:

Eine transparente Polyvinylchloridfolie (250 µm) wird mittels einer Keramikelektrode (Handcoronastation Typ CEE 42-0-1 MD, Breite 330 mm, Firma SOFTAL) im Abstand von ca. 1-2 mm und bei einer Leistung von 600 W und einer Behandlungsgeschwindigkeit von 10 cm/s an Luft viermalig coronabehandelt. Auf die behandelte Seite der Folie wird eine ethanolische Lösung, die 0,7 % des UV-Absorbers mit folgender Strukturformel 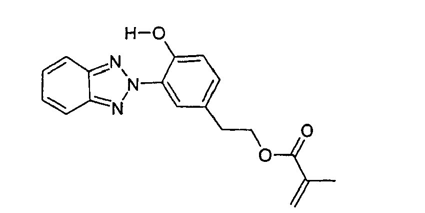 und 0,35% 1,1 Azobis(Cycolhexancarbonitril) enthält, aufgebracht, indem sie mittels eines 4 µm Rakels (Erichsen) aufgezogen wird. Die Proben werden kurz gelagert, bis der Alkohol verdunstet und die Proben trocken sind. Danach werden sie im Trockenschrank für 15 Minuten bei 80°C gelagert. Es werden transparente Beschichtungen erhalten und im Transmissionsmodus aufgezeichnete UV-Vis Spektren sind mit Lösungsspektren identisch und zeigen den für den UV-Absorber charakteristischen Absorptionspeak bei 345 nm.

### Beispiel 2:

Eine transparente Polyvinylchloridfolie (250 µm) wird mittels einer Keramikelektrode (Handcoronastation Typ CEE 42-0-1 MD, Breite 330 mm, Firma SOFTAL) im Abstand von ca. 1-2 mm und bei einer Leistung von 600 W und einer Behandlungsgeschwindigkeit von 10 cm/s an Luft viermalig coronabehandelt. Auf die behandelte Seite der Folie wird eine ethanolische Lösung, die 0,7 % des UV-Absorbers mit folgender Strukturformel 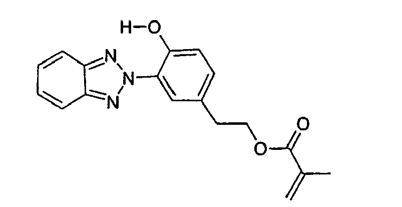 und 0,35% 1,1 Azobis(Cycolhexancarbonitril) enthält, aufgebracht, indem sie mittels eines 4 µm-Rakels (Erichsen) aufgezogen wird. Die Proben werden kurz gelagert, bis der Alkohol verdunstet und die Proben trocken sind. Danach werden sie mittels eines UV-Prozessors (Fusion Systems) mit einer mikrowellenangeregten Hg-Lampe und einer Leistung von 120 W/cm bei einer Bandgeschwindigkeit von 5 m/min bestrahlt. Es werden transparente Beschichtungen erhalten und im Transmissionsmodus aufgezeichnete UV-Vis Spektren sind mit Lösungsspektren identisch und zeigen den für den UV-Absorber charakteristischen Absorptionspeak bei 345 nm.

### Beispiel 3:

Eine transparente Polyethylenfolie (150 µm) wird mittels einer Keramikelektrode (Handcoronastation Typ CEE 42-0-1 MD, Breite 330 mm, Firma SOFTAL) im Abstand von ca. 1-2 mm und bei einer Leistung von 250 W und einer Behandlungsgeschwindigkeit von 10 cm/s an Luft 4-malig coronabehandelt. Auf die behandelte Seite der Folie wird eine Aceton Lösung, die 5 % des UV-Absorbers mit folgender Strukturformel 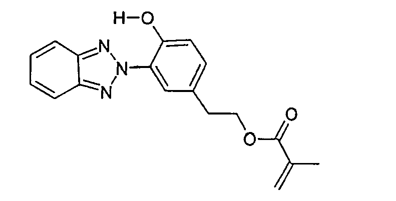 sowie 1% 1,1 Azobis(Cycolhexancarbonitril) und 2,5% Tris(2-hydroxyethyl)isocyanurat-triacrylat enthält, aufgebracht, indem sie mittels eines 50 µm Rakels (Erichsen) aufgezogen wird. Die Proben werden gelagert, bis das Aceton verdunstet und die Proben trocken sind. Danach bei 80°C im Trockenschrank eine Stunde gehärtet. Die oben genannte Lösung wird ein zweites Mal aufgetragen und auf die beschriebene Weise gehärtet. Es werden transparente, stabile Beschichtungen erhalten und im Transmissionsmodus aufgezeichnete UV-Vis Spektren ergeben im Bereich von 290 nm bis 360 nm optische Dichten von 1,5 bis 2,5.

### Beispiel 4:

Eine transparente Polyethylenfolie (150 µm) wird mittels einer Keramikelektrode (Handcoronastation Typ CEE 42-0-1 MD, Breite 330 mm, Firma SOFTAL) im Abstand von ca. 1-2 mm und bei einer Leistung von 250 W und einer Behandlungsgeschwindigkeit von 10 cm/s an Luft 4-malig coronabehandelt. Auf die behandelte Seite der Folie wird eine Aceton Lösung, die 5 % des UV-Absorbers mit folgender Strukturformel 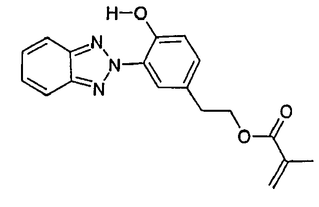 sowie 1% Acrylsäure 2-[4-(2-hydroxy-2-methylpropionyl)-phenoxy]-ethylester und 1% Tris (2-hydroxyethyl)isocyanurattriacrylat enthält, aufgebracht, indem sie mittels eines 50 µm Rakels (Erichsen) aufgezogen wird. Die Proben werden gelagert, bis das Aceton verdunstet und die Proben trocken sind. Danach werden sie mittels eines UV-Prozessors (Fusion Systems) mit einer mikrowellenangeregten Hg-Lampe und einer Leistung von 120 W/cm bei einer Bandgeschwindigkeit von 5 m/min 4-malig bestrahlt. Die oben genannte Lösung wird ein zweites Mal aufgetragen und auf die beschriebene Weise gehärtet. Es werden transparente, stabile Beschichtungen erhalten und im Transmissionsmodus aufgezeichnete UV-Vis Spektren ergeben im Bereich von 285 nm bis 360 nm optische Dichten von 1,5 bis 2,4.

## Patentansprüche

1. Verfahren zur Ausbildung von UV-Absorberschichten auf einem anorganischen oder organischen Substrat, **dadurch gekennzeichnet, dass** man
a) auf das anorganische oder organische Substrat ein Niedertemperatur-Plasma, eine Corona-Entladung oder energiereiche Strahlung einwirken läßt,
b) mindestens einen radikalbildenden Initiator und als UV-Absorber, enthaltend mindestens eine ethylenisch ungesättigte Gruppe, mindestens eine Verbindung ausgewählt aus der Gruppe bestehend aus 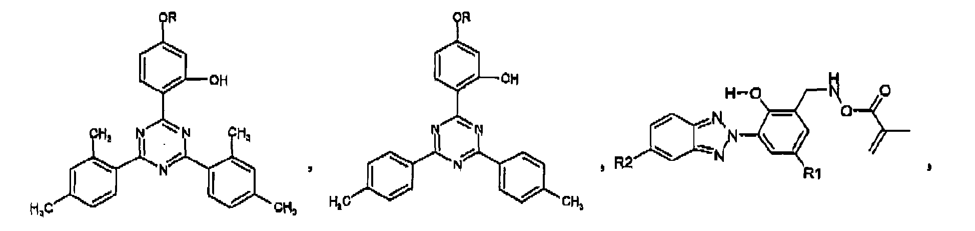 worin
R -CH₂CH₂OCOCH=CH₂, -CH₂COOCH₂CH=CH-Phenyl, -CH₂CH(OH)CH₂OCOC(CH₃)=CH₂, -CH₂CH=CH₂, -CH₂COO(CH₂)₇CH=CHC_{B}H₁₇, -OCH=CH₂ oder -CH-OCH=CH₂ darstellt;
R1 H, C₁-C₁₂-Alkyl, C₆-C₁₀-Aryl bedeutet; und
R2 H, Halogen, C₁-C₁₂-Alkyl, C₆-C₁₀-Aryl ist; 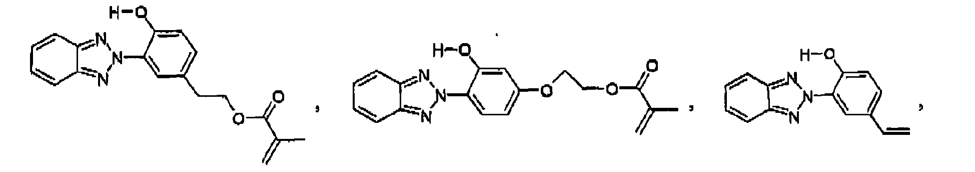 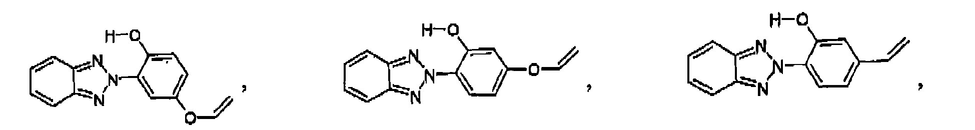 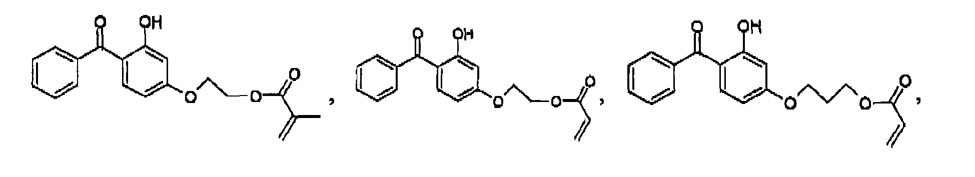 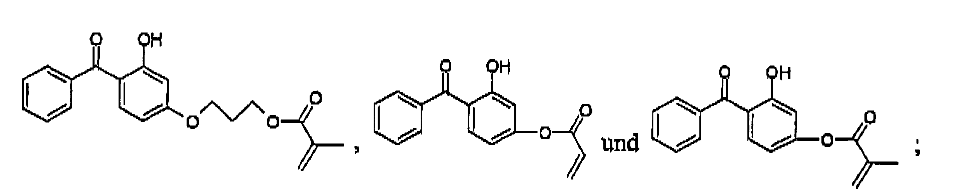
und gegebenenfalls in Form von Schmelzen, Lösungen, Suspensionen oder Emulsionen als Synergist mindestens ein sterisch gehindertes Amin, einen Aminoether (>NOR-Verbindung), ein Benzoxazin und/oder einen Thioether und/oder mindestens eine ethylenisch ungesättigte Verbindung auf das behandelte anorganische oder organische Substrat aufbringt,
c) das beschichtete Substrat erwärmt und/oder mit elektromagnetischen Wellen bestrahlt.

2. Verfahren nach Anspruch 1, **dadurch gekennzeichnet, dass** das Substrat in Form eines Pulvers, einer Faser, eines Filzes, eines Gewebes, einer Folie oder eines Formkörpers beschichtet wird.

3. Verfahren nach Anspruch 1 oder 2, **dadurch gekennzeichnet, dass** das Substrat ein synthetisches Polymer, ein natürliches Polymer, ein Metalloxid, ein Glas, ein Halbleiter, Quarz oder ein Metall ist oder dieses Material enthält.

4. Verfahren nach einem der Ansprüche 1 bis 3, **dadurch gekennzeichnet, dass** das Substrat ein Homo-, Block-, Graft- und/oder Copolymer ist oder enthält.

5. Verfahren nach einem der vorhergehenden Ansprüche, **dadurch gekennzeichnet, dass** das organische Substrat ein Polycarbonat, Polyester, halogenhaltiges Polymer, Polyacrylat, Polyolefin, Polyamid, Polyurethan, Polystyrol und/oder Polyether ist oder enthält.

6. Verfahren nach mindestens einem der vorhergehenden Ansprüche, **dadurch gekennzeichnet, dass** als Initiator ein Peroxid, Peroxodicarbonat, Persulfat, Benzpinakol, Dibenzyl, Disulfid, ein Azoverbindung, ein Redoxsystem, Benzoin, Benzilketal, Acetophenon, Hydroxyalkylphenon, Aminoalkylphenon, Acylphosphinoxid, Acylphasphinsulfid, Acyloxyiminoketon, eine Peroxyverbindung, ein halogeniertes Acetophenon, Phenylglyoxylat, Benzophenon, Oxim, Oximester, Thioxanthon, Ferrocen, Titanocen, Sulfoniumsalz, Iodoniumsalz, Diazoniumsalz, Oniumsalz, Borat, Bisimidazol, Polysilan und/oder Farbstoff eingesetzt wird, wobei gegebenenfalls zusätzlich Coinitiatoren und/oder Sensibilisatoren vorliegen.

7. Verfahren nach mindestens einem der vorhergehenden Ansprüche, **dadurch gekennzeichnet, dass** die ethylenisch ungesättigte Verbindung in Form eines Monomers, Oligomers und/ oder Polymers eingesetzt wird.

8. Verfahren nach Anspruch 7, **dadurch gekennzeichnet**, die ethylenisch ungesättigten Monomeren, Oligomeren und/oder Polymeren mono-, di-, tri-, tetra- oder multifimktionelle Vinylether, Acrylate und/oder Methacrylate sind.

9. Verfahren nach mindestens einem der vorhergehenden Ansprüche, **dadurch gekennzeichnet, dass** als Plasmagas ein Inertgas oder ein Gemisch aus Inertgas und Reaktivgas verwendet wird.

10. Verfahren nach Anspruch 9, **dadurch gekennzeichnet, dass** Luft, H₂, N₂, He, Ar, Kr, Xe, O₂ und/oder H₂O als Plasmagas bzw. als Gemisch aus Inertgas und Reaktivgas verwendet wird.

11. Verfahren nach mindestens einem der vorhergehenden Ansprüche, **dadurch gekennzeichnet, dass** die im Verfahrensschritt b) eingesetzte Flüssigkeit die Initiatoren in einer Menge von etwa 0,01 bis 20 Gew.%, insbesondere von etwa 0,1 bis 5 Gew.-%, enthält.

12. Verfahren nach mindestens einem der vorhergehenden Ansprüche, **dadurch gekennzeichnet, dass** die im Verfahrensschritt b) eingesetzte Flüssigkeit die UV-Absorber in einer Menge von etwa 0,1 bis 99 Gew.-%, insbesondere von etwa 0,1 bis 50 Gew.-%, enthält.

13. Verfahren nach mindestens einem der vorhergehenden Ansprüche, **dadurch gekennzeichnet, dass** die im Verfahrensschritt b) eingesetzte Flüssigkeit die ethylenisch ungesättigte Verbindung in einer Menge von etwa 0,1 bis 50 Gew.-%, insbesondere von etwa 0,1 bis 30 Gew.%, enthält.

14. Verfahren nach mindestens einem der vorhergehenden Ansprüche, **dadurch gekennzeichnet, dass** die im Verfahrensschritt b) eingesetzte Flüssigkeit übliche Zusatzstoffe der Lackindustrie, insbesondere Entschäumer, Emulgatoren, Tenside, Antifoulingmittel und/ oder Netzmittel, enthält.

15. Verfahren nach mindestens einem der vorhergehenden Ansprüche, **dadurch gekennzeichnet, dass** die UV-Absorberschicht im trockenen Zustand in einer Dicke von einer monomolekularen Schicht bis zu 2mm, insbesondere in einer Dicke von etwa 1 bis 1000 µm, ausgebildet wird.

16. Verfahren nach mindestens einem der vorhergehenden Ansprüche, **dadurch gekennzeichnet, dass** im Verfahrensschritt c) in Öfen, mit warmen Gasen, beheizten Walzen, IR-Strahlern und/oder mit Mikrowellen zum Aktivieren des Initiators erwärmt wird, wobei gegebenenfalls ein Trocknungsschritt vorgeschaltet wird.

17. Verfahren nach mindestens einem der vorhergehenden Ansprüche, **dadurch gekennzeichnet, dass** das Bestrahlen im Verfahrensschritt c) mit elelctromagnetischen Strahlen einer Wellenlänge von 200 mn bis 20000 nm oder mit elektronischen Strahlen durchgeführt wird, wobei gegebenenfalls ein Trocknungsschritt vorgeschaltet wird..

18. Verfahren nach mindestens einem der vorhergehenden Ansprüche, **dadurch gekennzeichnet, dass** der Verfahrensschritt c) in einer Inertgasatmosphäre oder in Luft durchgeführt wird.

19. Substrate mit UV-Absorberschichten, erhältlich nach einem Verfahren gemäß mindestens einem der vorhergehenden Ansprüche.

20. Substrat nach Anspruch 19, **dadurch gekennzeichnet, dass** die UV-Absorberschicht im Absorptionsmaximum des UV-Absorbers eine optische Dichte von etwa 0,1 bis 6, insbesondere von etwa 0,5 bis 4, aufweist.

21. Substrat nach Anspruch 20, **dadurch gekennzeichnet, dass** die optische Dichte etwa 1 bis 3 beträgt.

22. Substrat nach einem der Ansprüche 19 bis 21, **dadurch gekennzeichnet, dass** der UV-Absorberanteil in der UV-Absorberschicht mindestens etwa 10 Gew.-%, insbesondere mindestens etwa 15 Gew,-%, beträgt.

23. Substrat nach Anspruch 22, **dadurch gekennzeichnet, dass** der UV-Absorberanteil mindestens etwa 20 Gew.-% beträgt.

24. Verwendung des Substrats nach mindestens einem der vorhergehenden Ansprüche 19 bis 23 als Schutzschicht und/oder Filter, insbesondere für optische Zwecke.

## Claims

1. A process for forming UV absorber layers on an inorganic or organic substrate, which comprises
a) allowing a low-temperature plasma, a corona discharge or high-energy radiation to act on the inorganic or organic substrate,
b) applying to the treated inorganic or organic substrate at least one free-radical-forming initiator and, as UV absorber containing at least one ethylenically unsaturated group, at least one compound selected from the group consisting of 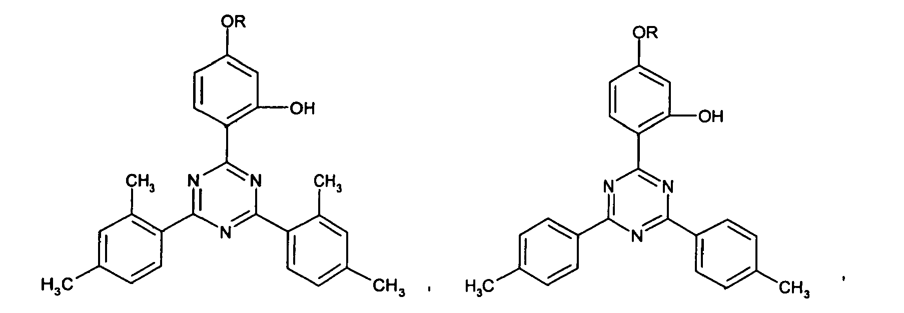 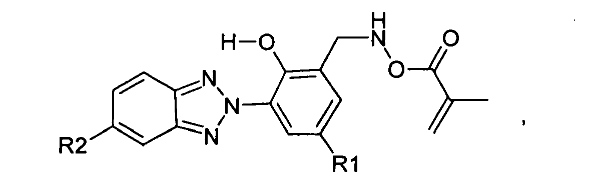 wherein
R is -CH₂CH₂OCOCH=CH₂, -CH₂COOCH₂CH=CH-phenyl, -CH₂CH(OH)CH₂OCOC(CH₃)=CH₂, -CH₂CH=CH₂, -CH₂COO(CH₂)₇CH=CHC₈H₁₇, -OCH=CH₂ or -CH-OCH=CH₂;
R1 is H, C₁-C₁₂alkyl, C₆-C₁₀aryl; and
R2 is H, halogen, C₁-C₁₂alkyl, C₆-C₁₀aryl; 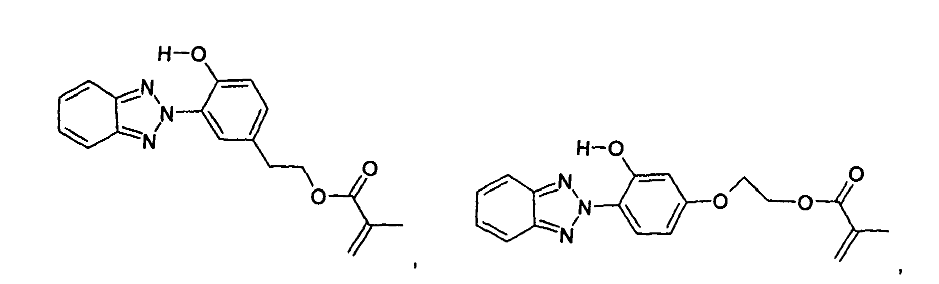 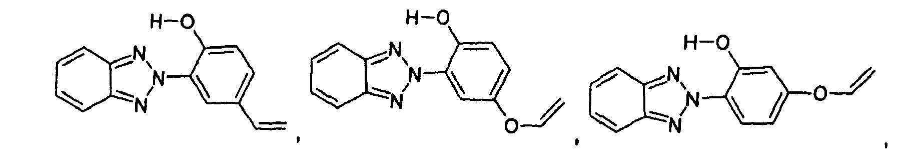 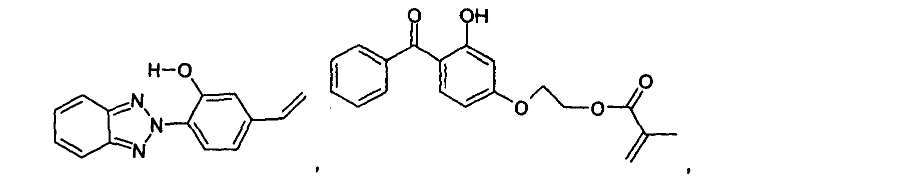 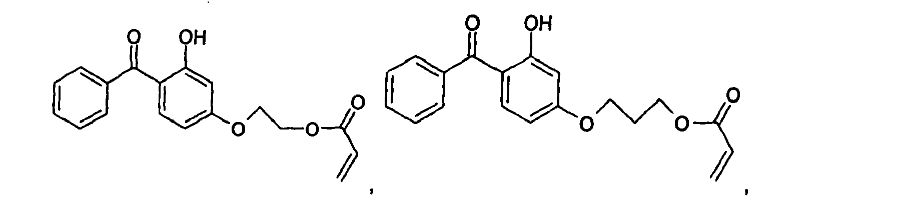 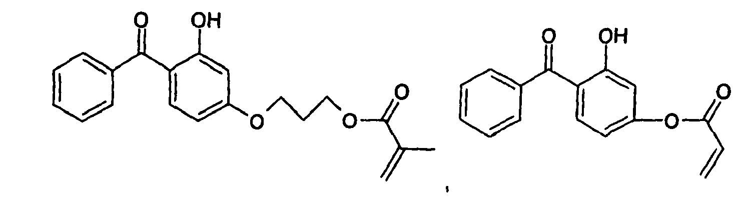 and 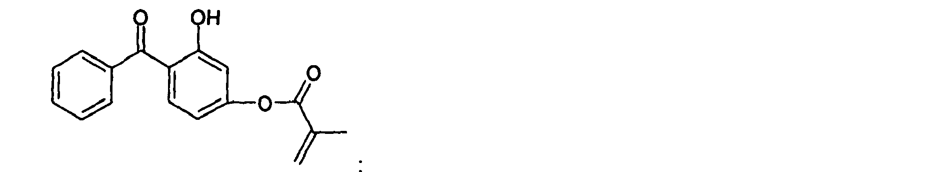 and, optionally in the form of melts, solutions, suspensions or emulsions, at least one sterically hindered amine, an amino ether (>NOR compound), a benzoxazine and/or a thio ether as synergist, and/or at least one ethylenically unsaturated compound,
c) heating the coated substrate and/or irradiating it with electromagnetic waves.

2. A process according to claim 1, wherein the substrate coated is in the form of a powder, a fibre, a felt, a woven fabric, a film or a moulding.

3. A process according to either claim 1 or claim 2, wherein the substrate is a synthetic polymer, a natural polymer, a metal oxide, a glass, a semi-conductor, quartz or a metal, or comprises such a material.

4. A process according to any one of claims 1 to 3, wherein the substrate is or comprises a homopolymer, block polymer, graft polymer and/or copolymer.

5. A process according to any one of the preceding claims, wherein the organic substrate is or comprises a polycarbonate, polyester, halogen-containing polymer, polyacrylate, polyolefin, polyamide, polyurethane, polystyrene and/or polyether.

6. A process according to at least one of the preceding claims, which comprises using as initiator a peroxide, peroxodicarbonate, persulfate, benzpinacol, dibenzyl, disulfide, an azo compound, a redox system, benzoin, benzil ketal, acetophenone, hydroxyalkylphenone, aminoalkylphenone, acylphosphine oxide, acylphosphine sulfide, acyloxyiminoketone, a peroxy compound, a halogenated acetophenone, phenyl glyoxylate, benzophenone, oxime, oxime ester, thioxanthone, ferrocene, titanocene, sulfonium salt, iodonium salt, diazonium salt, onium salt, borate, bisimidazole, polysilane and/or dye, there being present in addition, if desired, co-initiators and/or sensitisers.

7. A process according to at least one of the preceding claims, which comprises using the ethylenically unsaturated compound in the form of a monomer, oligomer and/or polymer.

8. A process according to claim 7, wherein the ethylenically unsaturated monomers, oligomers and/or polymers are mono-, di-, tri-, tetra- or multi-functional vinyl ethers, acrylates and/or methacrylates.

9. A process according to at least one of the preceding claims, which comprises using as plasma gas an inert gas or a mixture of inert gas and reactive gas.

10. A process according to claim 9, wherein as plasma gas, or as a mixture of inert gas and reactive gas, there is used air, H₂, N₂, He, Ar, Kr, Xe, O₂ and/or H₂O.

11. A process according to at least one of the preceding claims, wherein the liquid used in process step b) contains the initiators in an amount of approximately from 0.01 to 20% by weight, especially approximately from 0.1 to 5% by weight.

12. A process according to at least one of the preceding claims, wherein the liquid used in process step b) contains the UV absorbers in an amount of approximately from 0.1 to 99% by weight, especially approximately from 0.1 to 50% by weight.

13. A process according to at least one of the preceding claims, wherein the liquid used in process step b) contains the ethylenically unsaturated compound in an amount of approximately from 0.1 to 50% by weight, especially approximately from 0.1 to 30% by weight.

14. A process according to at least one of the preceding claims, wherein the liquid used in process step b) comprises additives customary in the coatings industry, especially defoamers, emulsifiers, surfactants, anti-fouling agents and/or wetting agents.

15. A process according to at least one of the preceding claims, which comprises forming the UV absorber layer in a thickness, in the dry state, from a monomolecular layer up to 2 mm, especially in a thickness of approximately from 1 to 1000 µm.

16. A process according to at least one of the preceding claims, wherein in process step c), heating is carried out in an oven, with warm gases, heated rollers, IR radiators and/or with microwaves in order to activate the initiator, a drying step optionally being carried out beforehand.

17. A process according to at least one of the preceding claims, wherein the irradiation in process step c) is carried out using electromagnetic rays of a wavelength of from 200 nm to 20 000 nm or using electron beams, a drying step optionally being carried out beforehand.

18. A process according to at least one of the preceding claims, which comprises carrying out process step c) in an inert gas atmosphere or in air.

19. A substrate having UV absorber layers, obtainable in accordance with a process according to at least one of the preceding claims.

20. A substrate according to claim 19, wherein the UV absorber layer has an optical density of approximately from 0.1 to 6, especially approximately from 0.5 to 4, in the absorption maximum of the UV absorber

21. A substrate according to claim 20, wherein the optical density is approximately from 1 to 3.

22. A substrate according to any one of claims 19 to 21, wherein the proportion of UV absorber in the UV absorber layer is at least approximately 10% by weight, especially at least approximately 15% by weight.

23. A substrate according to claim 22, wherein the proportion of UV absorber is at least approximately 20% by weight.

24. The use of the substrate according to at least one of the preceding claims 19 to 23 as a protecting layer and/or filter, especially for optical purposes.

## Revendications

1. Procédé pour la formation de couches d'absorbeur d'UV sur un substrat inorganique ou organique, **caractérisé en ce que**
a) on laisse agir sur le substrat inorganique ou organique un plasma à basse température, une décharge Corona ou un rayonnement riche en énergie,
b) on applique au moins un amorceur radicalaire et en tant qu'absorbeur d'UV contenant au moins un groupe à insaturation éthylénique, au moins un composé choisi dans le groupe constitué par 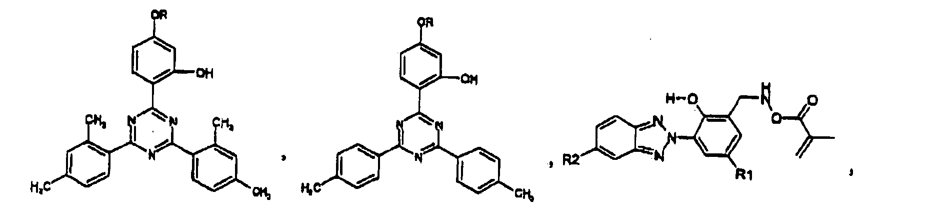 où
R représente -CH₂CH₂OCOCH=CH₂, -CH₂COOCH₂CH=CH-phényle, -CH₂CH (OH) CH₂OCOC (CH₃) =CH₂, -CH₂CH=CH₂, -CH₂COO (CH₂)₇CH=CHC₈H₁₇, -OCH=CH₂ ou -CH-OCH=CH₂ ;
R1 représente H, alkyle en C₁-C₁₂, aryle en C₆-C₁₀ ;
et
R2 représente H, halogène, alkyle en C₁-C₁₂, aryle en C₆-C₁₀; 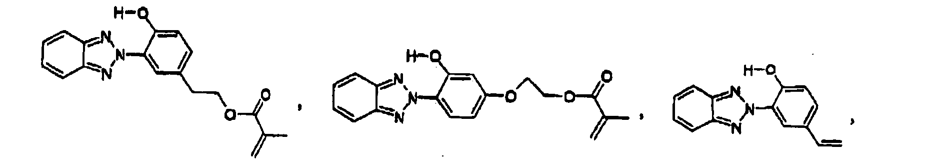 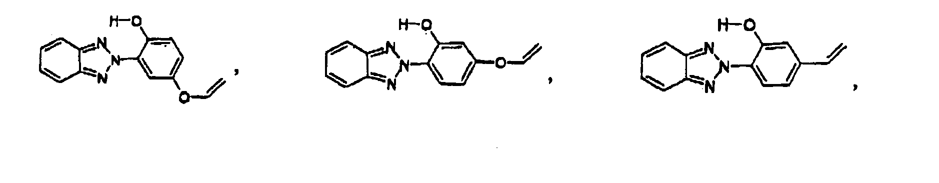 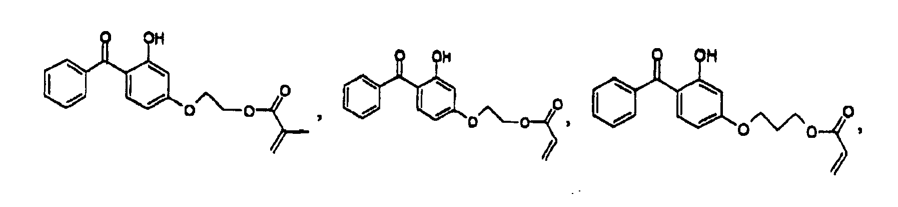 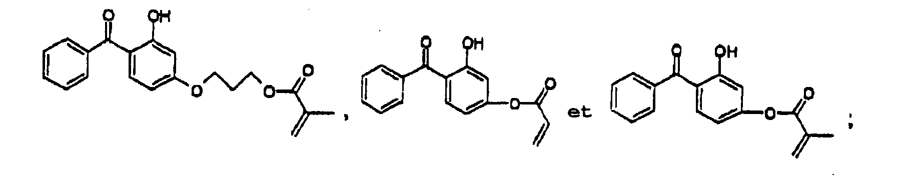
et éventuellement sous forme de matières fondues, de solutions, de suspensions ou d'émulsions en tant que synergiste au moins une amine à encombrement stérique, un aminoéther (composé >NOR), une benzoxazine, et/ou un thioéther et/ou au moins un composé à insaturation éthylénique, sur le substrat inorganique ou organique traité,
c) on chauffe et/ou irradie le substrat revêtu par des ondes électromagnétiques.

2. Procédé selon la revendication 1, **caractérisé en ce que** le substrat est revêtu sous forme d'une poudre, d'un feutre, d'un tissu, d'une feuille ou d'un corps moulé.

3. Procédé selon la revendication 1 ou 2, **caractérisé en ce que** le substrat est un polymère synthétique, un polymère naturel, un oxyde métallique, un verre, un semi-conducteur, du quartz ou un métal, ou contient cette matière.

4. Procédé selon l'une des revendications 1 à 3, **caractérisé en ce que** le substrat est ou contient un homopolymère, polymère à blocs, polymère greffé et/ou copolymère.

5. Procédé selon l'une des revendications précédentes, **caractérisé en ce que** le substrat organique est ou contient un polycarbonate, polyester, polymère halogéné, polyacrylate, polyoléfine, polyamide, polyuréthane, polystyrène et/ou polyéther.

6. Procédé selon au moins l'une des revendications précédentes, **caractérisé en ce qu'**on utilise en tant qu'amorceur un peroxyde, peroxodicarbonate, persulfate, benzpinacol, dibenzyle, disulfure, un composé azoïque, un système redox, benzoïne, cétal de benzile, acétophénone, hydroxyalkylphénone, aminoalkylphénone, oxyde d'acylphosphine, sulfure d'acylphosphine, acyloxyimino-cétone, un composé peroxy, une acétophénone halogénée, glyoxylate de phényle, benzophénone, oxime, ester d'oxime, thioxanthone, ferrocène, titanocène, sel de sulfonium, sel d'iodonium, sel de diazonium, sel d'onium, borate, bisimidazole, polysilane et/ou colorant, de plus des co-amorceurs et/ou sensibilisants étant éventuellement présents.

7. Procédé selon au moins l'une des revendications précédentes, **caractérisé en ce qu'**on utilise le composé à insaturation éthylénique sous forme d'un monomère, oligomère et/ou polymère.

8. Procédé selon la revendication 7, **caractérisé en ce que** les monomères, oligomères et/ou polymères à insaturation éthylénique sont des éthers vinyliques, acrylates et/ou méthacrylates mono-, di-, tri-, tétra- ou multifonctionnels.

9. Procédé selon au moins l'une des revendications précédentes **caractérisé en ce qu'**on utilise en tant que gaz plasma un gaz inerte ou un mélange de gaz inerte et de gaz réactif.

10. Procédé selon la revendication 9, **caractérisé en ce qu'**on utilise l'air, H₂, N₂, He, Ar, Kr, Xe, O₂ et/ou H₂O en tant que plasma gaz ou en tant que mélange de gaz inerte et de gaz réactif.

11. Procédé selon au moins l'une des revendications précédentes, **caractérisé en ce que** le liquide utilisé dans l'étape de procédé b) contient les amorceurs en une quantité d'environ 0,01 à 20% en masse, en particulier d'environ 0,1 à 5 % en masse.

12. Procédé selon au moins l'une des revendications précédentes, **caractérisé en ce que** le liquide utilisé dans l'étape de procédé b) contient les absorbeurs d'UV en une quantité d'environ 0,1 à 99 % en masse, en particulier d'environ 0,1 à 50 % en masse.

13. Procédé selon au moins l'une des revendications précédentes, **caractérisé en ce que** le liquide utilisé dans l'étape de procédé b) contient le composé à insaturation éthylénique en une quantité d'environ 0,1 à 50 % en masse, en particulier d'environ 0,1 à 30 % en masse.

14. Procédé selon au moins l'une des revendications précédentes, **caractérisé en ce que** le liquide utilisé dans l'étape de procédé b) contient des additifs usuels dans l'industrie des vernis, en particulier des agents anti-mousse, émulsifiants, agents de surface, additifs anti-dépôt et/ou agents mouillants.

15. Procédé selon au moins l'une des revendications précédentes, **caractérisé en ce que** la couche de l'absorbeur d'UV est formée à l'état sec en une épaisseur d'une couche monomoléculaire jusqu'à 2 mm, en particulier en une épaisseur d'environ 1 à 1000 µm.

16. Procédé selon au moins l'une des revendications précédentes, **caractérisé en ce qu'**on chauffe dans l'étape de procédé c) dans des fours, avec des gaz chauds, des cylindres chauffés, des sources de rayonnement IR et/ou avec des micro-ondes pour activer l'amorceur, éventuellement une étape de séchage étant placée en amont.

17. Procédé selon au moins l'une des revendications précédentes, **caractérisé en ce que** l'irradiation est mise en oeuvre dans l'étape de procédé c) par du rayonnement électromagnétique d'une longueur d'onde de 200 nm à 20000 nm ou par du rayonnement électronique, éventuellement une étape de séchage étant placée en amont.

18. Procédé selon au moins l'une des revendications précédentes, **caractérisé en ce que** l'étape de procédé c) est mise en oeuvre sous une atmosphère de gaz inerte ou à l'air.

19. Substrats avec des couches d'absorbeur d'UV, que l'on peut obtenir selon un procédé selon au moins l'une des revendications précédentes.

20. Substrat selon la revendication 19, **caractérisé en ce que** la couche d'absorbeur d'UV présente dans le pic d'absorption de l'absorbeur d'UV une densité optique d'environ 0,1 à 6, en particulier d'environ 0,5 à 4.

21. Substrat selon la revendication 20, **caractérisé en ce que** la densité optique s'élève d'environ 1 à 3.

22. Substrat selon l'une des revendications 19 à 21, **caractérisé en ce que** le taux de l'absorbeur d'UV dans la couche d'absorbeur d'UV s'élève à au moins environ 10 % en masse, en particulier à au moins environ 15 % en masse.

23. Substrat selon la revendication 22, **caractérisé en ce que** le taux d'absorbeur d'UV s'élève à au moins environ 20 % en masse.

24. Utilisation du substrat selon au moins l'une des revendications précédentes 19 à 23 en tant que couche de protection et/ou filtre, en particulier à des fins optiques.
